Europäisches Patentamt

European Patent Office

Office européen des brevets

(11) Publication number: **0 004 847**
A1

## EUROPEAN PATENT APPLICATION

(21) Application number: 78300429.4

(22) Date of filing: 28.09.78

(51) Int. Cl.²: **H 01 M 4/90**
H 01 M 8/08, C 01 G 1/12

(30) Priority: 18.04.78 US 897308

(43) Date of publication of application:
31.10.79 Bulletin 79/22

(84) Designated Contracting States:
BE CH DE FR GB LU NL

(71) Applicant: Lyons, Ernest H., Jr.
23871 Willows Drive, 350
Laguna Hills California 92653(US)

(72) Inventor: Lyons, Ernest H., Jr.
23871 Willows Drive, 350
Laguna Hills California 92653(US)

(74) Representative: Baldock, Hugh Charles et al,
Lloyd Wise, Bouly & Haig Norman House 105-109 Strand
London, WC2R 0AE(GB)

(54) Method and fuel cell for the electrochemical oxidation of hydrogen and carbonaceous fuels.

(57) A method of and a fuel cell for generating electric current comprising oxidizing hydrogen, hydrocarbon, or other fuel in the fuel cell (1) in contact with electrolyte comprising water have a pH in the range of 5 to 10, and in contact with an anode (2) for oxidizing the fuel, the anode (2) having at least one lower sulphide of at least one transistion metal present at the anode surface as an electro-catalyst for oxidation of the fuel, the sulphide being present at the anode surface in a sufficient amount to catalyze the electrochemical oxidation of the fuel and being substantially immune to chemical and electrochemical attack under conditions of operation of the cell (1).

./...

EP 0 004 847 A1

This invention relates to improvements in fuel cells for electrochemical oxidation of hydrogen, hydrocarbons and other carbonaceous fuels.

Of all fluid fuels, hydrocarbons offer the most energy per unit cost by a large margin. Thus, major amounts of research money and manpower have been committed to the quest for fuel cells that are suitable for hydrocarbon fuels. Although cells based on platinum or platinum-ruthenium alloy anodes have apparently proven to be the most effective ones for hydrocarbon fuels, their performance has been disappointing. In the oxidation of propane in 85-90% $H_3-PO_4$ at 150-175°C, the overvoltage has been very high, about 300-350 mV at useable current densities. This causes the loss of about 30-35% in conversion efficiency in a propane/oxygen cell. Moreover, in use the anode has steadily increased in overpotential until finally the flow of current stops; then, after some seconds, current flow is resumed at about the original overpotential. This cycle is repeated at regular intervals. This behaviour offers difficulties in practical applications. Also, the short supply and high cost of platinum have discouraged commercialization.

- 3 -

According to one aspect of the invention there is provided a method of generating electric current comprising oxidizing hydrogen, hydrocarbon or other fuel in a fuel cell in contact with an electrolyte comprising water having a pH in the range of about 5 to 10, and in contact with an anode for oxidizing the fuel, the anode having at least one lower sulphide of at least one transition metal present at the anode surface as electro-catalyst for oxidation of the fuel, the sulphide being present at the anode surface in a sufficient amount to catalyze electro-chemical oxidation of the fuel and being substantially immune to chemical and electrochemical attack under conditions of operation of the cell.

Preferably at least one transition metal includes nickel, copper, iron and cobalt.

According to another aspect of the present invention there is provided a fuel cell for oxidizing hydrogen, hydrocarbons and other fuel in accordance with the method set forth above, comprising:

I.    an aqueous electrolyte comprising water having a pH in the range of about 5 to 10;

II.   an anode, for oxidizing the fuel, including at the surface of the anode at least one lower sulphide of at least one transition metal, at least one lower sulphide being:

(a)   present at the surface of the anode in sufficient
      amount to catalyze electro-chemical oxidation
      of the fuel, and

(b)   substantially immune to chemical and electro-
      chemical attack under cell operating conditions;
      and

III. an oxygen cathode.

The anode is a member having a contact surface or surfaces including at least a catalytic amount of a compound which is substantially non-oxidizeable at fuel oxidation potential. The compound can be for instance, at least one binary or ternary metal sulphide compound, including especially those compounds which contain at least one transition metal.

The term compound is intended to include compounds and mixtures of compounds whose molecular composition or average composition may be non-stoichiometric. The applicable sulphides are lower sulphides in that they have a deficiency of the electro-negative element, i.e. sulphur. Thus, these sulphides are believe to contain metal atoms which have less than their maximum possible valence. For example, the valence of nickel, iron and cobalt atoms in the applicable sulphides appears to be less than the valence the atoms would have in their respective disulphides.

- 5 -

In the present invention, the electrolyte is a solution of one or more neutral salts. Neutral salts are those which in their pure aqueous solutions exhibit a pH in the range of about 5 to 10 and more preferably about 6 to 10. Examples include the nitrates, sulphates, chlorides, phosphates, hydrogen phosphates, bicarbonates, perchlorates, fluoborates and fluosilicates of any of the alkali metals, any of the alkaline earth metals. The salts are selected on the basis of their solubility in water and the presence of sufficient conductivity in the resultant solutions for operation of the cell and producing appreciable amounts of electricity at acceptable potential and current density.

In the manufacture of a cell having the aforesaid anode and neutral salt electrolyte, they are combined with any oxygen cathode which readily adsorbs oxygen (including oxygen from air) in an electrochemically active states, and conducts under the conditions prevailing in the cell. For example, one may use platinum black distributed on and secured to a support, or nickel oxide disposed in sintered form on a porous nickel skeleton, preferably lithiated. These cathodes will be recognised by those skilled in the art as having been used heretofore in alkaline electrolyte fuel cells and in air depolarised primary cells. Other cathodes can be used if desired.

In the operation of the method of the invention, the pH of the electrolyte is maintained in the range of about 5 to about 10, more preferably about 6 to about 10, and most preferably about 7 to about 9. Optionally, and preferably, through the addition of a buffer or buffers to the electrolyte, one can control the pH at the surface of the anode, thereby reducing overvoltage and increasing the efficiency of the cell. Also, enhanced $CO_2$ absorption capacity can be attained in electrolytes containing the nitrate(s) and/or sulphate(s) of sodium by buffering with borates. Other buffers may be used, such as for instance $NaH_2PO_4$ and $Na_2HPO_4$.

If necessary or desired, $CO_2$ may be removed from the electrolyte in any desired manner, but this is advantageously done by circulating $CO_2$-bearing electrolyte away from the anode; liberating $CO_2$, such as by heating and/or agitating the electrolyte, including sparging the electrolyte and/or flowing it over baffles or subjecting it to other agitating means; and returning the electrolyte to the anode. The $CO_2$ liberation may be carried out in the cell or in a separate unit, including for instance a unit connected to the cell by conduits and provided with pumping means to circulate electrolyte around a loop which includes the cell, conduits, pumping means and a separate $CO_2$ liberating unit.

The invention produces a variety of worthwhile advantages. The various embodiments of the invention enable one to obtain at least one and often a combination of the following advantages. One striking advantage is the low cost and excellent performance of anodes and cells in accordance with the invention, as compared to those based on platinum and its alloys. Preferred embodiments of the invention are notable for their ability to perform long-term, steady-state direct conversion of hydrocarbons to electricity, carbon dioxide and water at substantial current density and relatively low over-potential. This is a particularly important advantage in view of the high energy content per unit cost of hydrocarbons. A major advantage of preferred embodiments is that they can produce current densities of about $25mA/cm^2$ or higher at anodic overpotentials of about 250mV or less. It is surprising that the catalytic activity of at least some of the above-described sulphide anodes, as reflected in overpotential, is superior to that of platinum. In general, the low overpotentials may compensate, at least to a substantial extent, for the ohmic loss incurred by the use of a neutral instead of an acid electrolyte. In most cases, the anodes of the present invention conduct electricity at least as well as some of the more conductive semiconductors and, in some cases, exhibit metallic conductivity. Also, under the cell operating conditions described herein, the anodes are substantially immune to chemical and electro-chemical attack.

There are additional advantages relating to the handling of $CO_2$ (carbon dioxide) produced by the oxidation of hydrocarbons in the cells of the present invention. $CO_2$ is nearly insoluble in a strong acid electrolyte, but is more readily soluble in an aqueous neutral salt electrolyte. Whether the electrolyte is strongly acid or neutral, there is a tendency for $CO_2$ to back-diffuse into the fuel at the fuel-anode-electrolyte interface. The diffused $CO_2$ causes polarisation and therefore reduced cell potential. However, the neutral electrolyte used in the present invention, because of its greater capacity to dissolve $CO_2$, reduces the tendency for $CO_2$ to diffuse into the fuel. Also, $CO_2$ can be removed from the electrolyte by techniques which are relatively simpler than those generally employed for separation of $CO_2$ from fuel. When $CO_2$ is removed from the electrolyte in accordance with the invention, the fuel stream is less quickly diluted by $CO_2$, reducing polarisation and diminishing the need for separating $CO_2$ from the fuel. When a buffer is included in the electrolyte, it can increase the $CO_2$ capacity of the electrolyte and lower the over-potential at the anode by about 30-40mV.

A neutral electrolyte is substantially non-corrosive to common structural materials, such as carbon steels, stainless steels and most plastics. Thus a wider variety of less costly materials of construction can be used in making the cells. Other advantages will become apparent to those skilled in the art.

Illustrative examples of sulphides contemplated for use in fuel cell anodes in accordance with the invention are $Ni_2S_2$, $Ni_7S_6$, NiS, $Cu_2S$, $Cu_9S_5$, $Cu_{1.75}S$, $Co_4S_3$, $Fe_xS$, wherein "x" is any whole or fractional number in the range from 1 to 2, and $Cu_3FeS_3$, or a mixture containing one of these.

The formulae given herein for certain of the metal sulphides are nominal; that is, the ratios of metal to sulphur actually found in the compounds can be and normally are slightly different from the theoretical ratios indicated by the formulae. This is because the metals and sulphur normally have a pronounced tendency, partly because of lattice defects, to combine in ratios which slightly deviate from the theoretical ratios. This is true even when the ratio of the reactants corresponds to a given nominal composition. The use of "doping" additions is also contemplated. The sulphides referred to above may be slightly deficient in the number ratio of sulphur atoms to metal atoms, as compared to their nominal formulae. NiS, for instance, is deficient in sulphur by about 0.1-0.2%. Thus, the preferred compounds for use in the present invention, including the $Ni_3S_2$, NiS, $Cu_2S$ have atomic ratios of sulphur to metal which are less than one.

Among the applicable sulphides are some which may be subject to limited chemical and/or oxidative attack in the pH range of about 5 to 7; however, those which are sufficiently resistant to such attack so that they can provide practical or useful cell life are said to be substantially immune to attack. The preferred sulphides are stable against oxidation and chemical attack at anode operation potentials at pH's of 7 or more.

It is believed that in the crystal lattices of certain of the preferred sulphides, each metal atom is partly surrounded by sulphur atoms, but is also approached fairly closely by two other metal atoms. These metal-metal distances are believed to be short enough so that the bonds between these metal atoms have a substantial degree of metallic character which is referred to herein as "metal-metal bonding". It is believed that in the preferred sulphides, metal-metal bonding, defect structures, and orbital vacancies having d-character or some combination of these properties, are present in sufficient abundance to contribute, at least in part, to the catalytic activities and/or conductivities of these compounds. Among the applicable copper sulphides, those having the rhombic type lattice are preferred.

Anodes of various metals, when in contact with aqueous electrolytes, tend to adsorb water on their surfaces. It is believed that water so held interferes with the approach of hydrocarbon fuel molecules, and establishment of contact. It is also believed that such contact must occur for the fuel molecules to become dissociated and electro-oxidized. The preferred sulphides of the present invention are believed to exhibit much less adsorption of water on their surfaces than do platinum or nickel in the presence of the electrolyte and fuel.

In the anodes used in the present invention, the metal sulphide(s) is (are) distributed at the surface of the anode in a form having a sufficiently large specific surface and in sufficient amount to catalyze the electrochemical oxidation for exmaple at a potential of at least about 0.2 volts and at a rate yielding current density of at least about 5 mA/cm$^2$, more

preferably at least about 25 mA/cm$^2$ and still more preferably at least about 75 mA/cm$^2$, especially if the anode has a very high specific surface, e.g. at least about 100 cm$^2$/cm$^2$ (units of actual surface area per unit of geometric area). The sulphide may be present in the body of the anode or only on its surface.

When the anode includes materials other than the sulphide(s) they should be resistant or substantially immune to oxidative attack at anode operating potentials and conditions. These other materials may include binders and other non-conductive materials but preferably the amount thereof should be held to a minimum. The most preferred other materials include materials which are more conductive than the sulphide(s) and/or which are in a form suitable to act as a support for the sulphide(s). Examples include metals and carbonaceous materials characterised by the presence of sufficient graphitic crystalline structure to render them conductive. When the anode is essentially compacted sulphide(s) composited with a binder, the binder may represent 10% or less by weight of the composite, and in some cases 1% or less. When the anode comprises sulphide distributed at the surface of a support, the weight percentrage of sulphide(s) may range from one percent or a small fraction thereof, based on total anode weight, up to a major weight proportion. Preferably, the major portion of the weight of metal sulphide (e.g. electrocatalyst) material present at the surface of the anode where it interfaces with electrolyte should be the lower transition metal sulphide referred to herein. In the most preferred forms of the invention, the sulphide represents at least about 50% by weight of the anode and occupies at least about 90% of the surface area thereof. Where the sulphide is one of the less conductive ones, and other material (e.g. graphite) is present in the anode to improve conductivity, the proportions of sulphide and other material may be selected to provide the optimum balance between conductivity and available catalytic surface.

Anodes with high specific surface may be prepared by mixing the powdered sulphide with binder in any suitable form, such as for instance, powder form, aqueous suspension or the like. Suitable binders include synthetic resins which are not attacked under conditions prevailing in the cell, such as for instance PTFE (poly tetrafluoroethylene), polyethylene, polypropylene and others. The mixture is then pressed onto any suitable support, such as for instance a conductive screen of nickel, gold-plated nickel, stainless steel, tantalum or other material (including alloys). If the mixture of sulphide and binder includes water or other suspending liquid, such liquid may be evaporated during pressing or prior thereto. The pressing operation brings about sufficiently intimate contact between the sulphide and support so that the latter can draw off current generated by oxidation during operation of the completed cell. During or subsequent to pressing, the compact is heated

- 13 -

briefly to a temperature high enough to sinter the binder in the mixture. When powdered graphite is incorporated in the mixture, it enhances electrical conductivity. One side of the electrode may be provided with a thin, porous coating of PTFE by spraying a suspension or pressing a film onto the surface, in order to supply further "wet-proofing", but this is not usually necessary when the sulphides themselves are hydrophobic. The preparative process follows essentially the well-known method of Niedrach and Alford, J. Electrochem. Soc. 112, 117 (1965). Alternatively, one may use the procedure described in U.S. Patent 3,305,403, except that in the activation procedure, i.e. column 2, lines 25 et seq., the order of applying liquids for removing foreign substances is as follows: aliphatic hydrocarbon, alkanol, water, strong alkali or mineral acid, and water, followed by drying. It is desirable that the anode be kept wet throughout the alkanol-water-strong alkali or mineral acid sequence. Techniques described above may also be used in fabricating cathodes. Other known techniques can be employed.

The electrolyte may be in any suitable physical form. For instance it may consist of liquid only. Optionally, it may be a liquid held in a matrix, gel or other supporting medium. For example, immobilized electrolytes and wet ion exchange membranes are contemplated. These may be in any form or shape which is convenient for contacting the fuel, anode, cathode and oxidant, and may be of any material, such as for example fluorinated or non-fluorinated polystyrene sulphonic acid, which is capable of exchanging hydrogen ion and transporting ionic or molecular species which can supply oxygen to the fuel.

Examples of suitable neutral salts for the electrolyte are $NaNO_3$, $Na_2SO_4$, $NaCl$, $KNO_3$, $K_2SO_4$, $KCl$, $LiCl$, $LiNO_3$, $Li_2SO_4$, $CsNO_3$, $Cs_2SO_4$, $CsCl$, $KH_2PO_4$, $K_2HPO_4$, $NaH_2PO_4$, $Na_2HPO_4$, $NaBF_4$, $KBF_4$, $Na_2SiF_6$, $Mg(BF_4)_2$, $Ca(BF_4)_2$, $MgSiF_6$, $K_2SiF_6$, $CaSiF_6$, $Mg(NO_3)_2$, $Ca(NO_3)_2$, $MgCl_2$, $MgSO_4$, $CaCl_2$. The sodium and cesium salts are preferred. Merely dissolving the indicated salt in water may or may not produce a neutral electrolyte of the desired pH. If pH adjustment is necessary, it can be done with e.g.: $Na_2CO_3$, $NaHCO_3$, $HNO_3$, $H_2SO_4$, $H_3PO_4$ or $NaOH$.

In principle, the applicable range of concentrations of the salts in the electrolytes extends from the minimum required to produce significant conductivity in the solution up to the point of saturation. Up to a point, increasing concentration of salt improves conductivity at a given operating temperature. However, as the concentration used approaches saturation, there is a hazard of crystallization upon cooling of the cell due to load reduction of shut-down. Thus, concentration is normally selected on the basis of providing maximum conductivity within the limits of safely preventing crystallization.

Borate ions and phosphate ions are effective buffers

- 15 -

and may be supplied to the electrolyte in any convenient manner such as by addition of salts or by addition of the corresponding acid and adjustment of pH to the neutral range. Convenient salts (including anhydrous forms and the various available hydrates) are sodium tetraborate ($Na_2B_4O_7$), sodium metaborate ($NaBO_2$), disodium phosphate ($Na_2HPO_4$) and sodium acid phosphate ($NaH_2PO_4$), corresponding potassium salts, or mixtures of two or more salts. Borax ($Na_2B_4O_7 \cdot 10H_2O$) is particularly preferred.

According to Hart and Womack, "Fuel Cells", Chapman Hall, pages 95-103, a good oxygen electrode for alkaline solutions is characterised by an ability to adsorb $OH^-$ or related species. Such ions as $Cl^-$, $SO_4^=$, and $CO_3^=$, tend to be adsorbed on oxide surfaces, and may occupy sites of catalytic activity for the electro-reduction of oxygen, so inhibiting the action of the cathode. This may explain why the performance of platinum cathodes suffers when used in conjunction with neutral electrolytes containing these ions. For this reason, it may be advisable to avoid, limit, control or substantially eliminate concentrations of $Cl^-$ and $SO_4^=$ when using platinum and similarly behaving cathodes, and to select cathodes less sensitive to $Cl$ and $SO_4^=$ when substantial quantities of such ions are present in the electrolyte. On the other hand, nitrate and borate ions, which are preferred constituents of the electrolyte, have little tendency to be adsorbed; and in the range of pH to be used, $CO_3^=$ is virtually absent, for it is converted to bicarbonate, which is not strongly adsorbed.

A wide variety of metals, metal oxides and higher metal sulphides are contemplated for use in the cathode of the present invention, including those of iron, manganese, molybdenum, chromium, tungsten, rhenium, nickel, cobalt, lead, tin, copper, silver, platinum, ternary oxides such as the so-called bronzes (e.g., tungsten "bronze", a compound of $WO_3$ with varying proportions of $Na_2O$), spinels (e.g., $CoO.Al_2O_3$), thiospinels, and certain metal alloys (e.g., Ni/Sn) which form an oxide coating which is both conductive and protective. It is usually considered that an important property of an oxygen electrocatalyst is ability to dissociate peroxide so as to keep its concentration to a level as low as $10^{-19}M$ (see Hart and Womack, pp 101-102). However, this requirement would be removed when the catalyst is such that it operates without peroxide playing a key role. The oxygen cathode may be fabricated in the manner described by Hart and Womack and others in the literature.

In principle, the cell may be operated at temperatures throughout the range in which the electrolyte remains essentially in the liquid state. However, for highest efficiency and yield of current, the operating temperature should be as high as possible, preferably $90^{O}C$ or higher, and up to about $10^{O}C$ below the boiling point of the electrolyte, but preferably below $140^{O}C$. Under some circumstances it may be advantageous to operate the cell under pressure to increase the temperature at which the electrolyte may be retained as liquid.

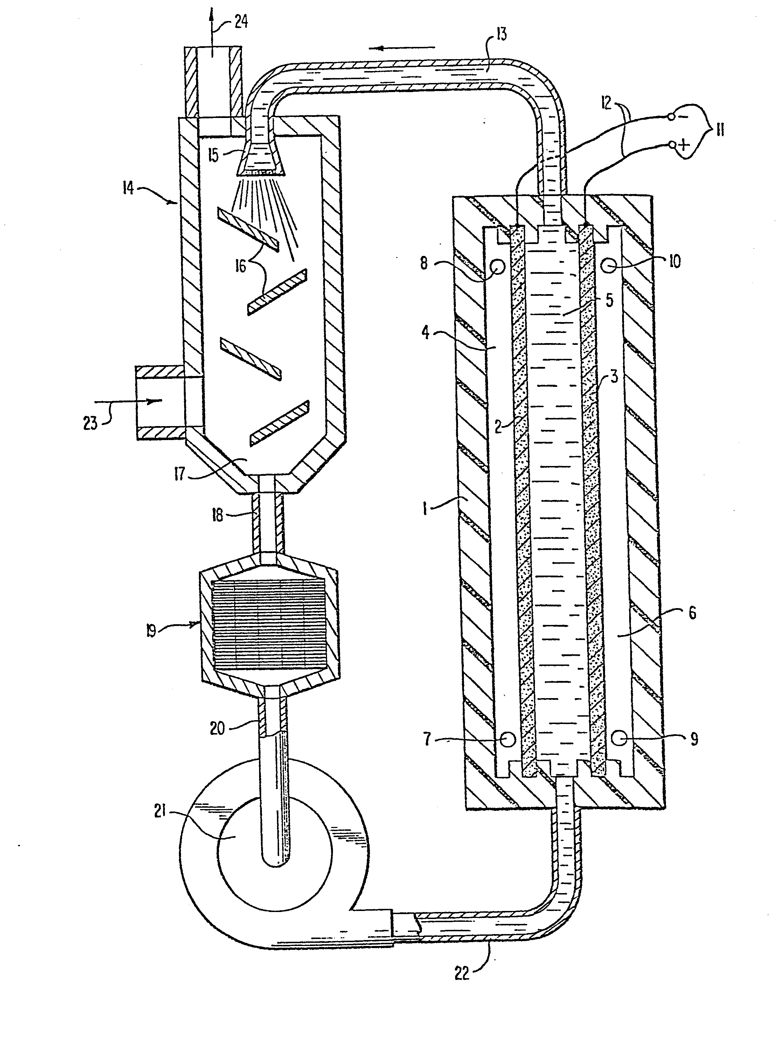

An embodiment of the invention will now be described, by way of example with reference to the accompanying drawing showing a partly schematic sectional view of a fuel cell according to the invention. As shown in the drawing, the cell comprises a vessel 1, constructed of a nonconducting material such as a heat-resistant plastic, and contains two electrodes, the anode 2, and the cathode 3. These electrodes divide the cell into three compartments; a fuel chamber 4; an electrolyte chamber 5; and an air chamber 6. Gaseous fuel enters by the inlet port 7. The outlet port 8 provides the capability of removing fuel if it becomes too contaminated with unreactive substances in the fuel, which remain as a residue, or with carbon dioxide back-diffusing from the anode. Air is supplied to the air chamber 6 through the inlet port 9. When it becomes depleted in oxygen through operation of the cell, it is removed through outlet port 10. The air supply is provided by a blower and suitable conduits, not shown. In some applications, oxygen gas may be employed instead of air. Fuel may be propane gas, for example, coming from a pressure tank through a reducing valve and suitable conduit, not shown.

In operation, gaseous fuel diffuses through pores provided in the anode 2 to the menisci of electrolyte 5 within these pores. Electrochemical oxidation of fuel is believed to proceed at these menisci, or very near to them. Carbon dioxide resulting from the oxidation dissolves in the electrolyte, though small quantities may back-diffuse through the anode pores and escape into the fuel chamber. Hydrogen ions are also produced in the oxidation reaction; they combine with a buffer salt in the electrolyte, and diffuse away from the anode into the electrolyte chamber. At the cathode 3 air diffuses through pores provided therein, reaching the menisci of the electrolyte within them, where electrochemical reduction of oxygen is believed to occur. The reduction reaction consumes hydrogen ions, obtained by dissociation of buffer acid. Since the production of hydrogen ions at the anode and their consumption at the cathode are in identical quantities, there is no net change in the electrolyte.

In consequence of the electrochemical reactions, an electrical potential is produced at the electrodes, and appears at the terminals 11, which are connected to the electrodes by suitable conductors 12. When the electrical circuit is completed across these terminals, a current flows and supplies power.

Electrolyte 5 flows from the cell through a conduit 13 to degasser 14, constructed of suitable metal or plastic. Electrolyte issues from the spray nozzle 15 over a series of baffles 16, and drains to a sump 17, from which it passes through conduit 18 to radiator 19 where it is cooled. It then flows through conduit 20 to circulating pump 21, from which it issues to conduit 22, which conducts it back to the electrolyte chamber in the cell, thus completing its circuit.

In the degasser 14 carbon dioxide is released from the electrolyte into air or other gas which enters the degasser through inlet 23 and leaves through outlet 24. Air is supplied either by natural draft or thorugh a blower, not shown. Besides serving to lower the carbon dioxide content of the electrolyte, the degasser also condenses water vapour on its cool walls, thus recovering some of the water vapour from the electrolyte which would otherwise be lost in the stream of air and carbon dioxide leaving the degasser. Additional means for cooling this stream so as to recover additional water may be provided, if desired, by attaching a condenser, not shown, to outlet 24. The degasser 14 and radiator 19 may be combined into a single unit if desired.

It will be understood that the cell 1 may contain a plurality of electrodes following well-known practice with fuel cells or other batteries. A wide variety of other arrangements of the fuel cell system are of course possible without departing from the present invention.

The invention will be further illustrated by a number of non-limiting examples in which all parts are by weight unless the contrary is clearly indicated.

### Example 1

$Ni_3S_2$ was prepared by mixing finely divided sulphur and nickel powders in the theoretical proportions, and heating the mixture in a covered crucible at red heat for 60 minutes. After cooling, the product was finely ground and mixed with a Teflon suspension. It was pressed onto a stainless steel screen and sintered at 200 psi and 320$^\circ$ for 2 minutes. The resulting anode was rigid, black and had a low lustre.

Prior to use the anode was dipped in and promptly removed from an aqueous electrolyte solution described below. On withdrawal, no retained film of electrolyte was visible on the anode with the naked eye. Thus, the anode was fabricated appeared hydrophobic, i.e. appeared to exhibit non-wettability or at least a limited wettability or adsorption of water which may be beneficial in reducing the extent to which water occupies the area available on the anode surface, and particularly any catalytic sites located thereon.

The anode was mounted in the central compartment of a three-compartment cell. This anode compartment opened into a reference compartment through a medium-grade glass frit. A Beckman calomel electrode was used as the reference electrode, and anode potentials were measured by means of a Keithly electrometer connected between the anode and the calomel electrode. The cathode compartment was connected to the anode compartment by a large bore tube containing two glass frits. The cathode consisted of a tantalum screen, or in a few cases, a platinum flag. All compartments were filled with the electrolyte. Polarizing current was supplied by a ballasted rectifier, controlled manually to furnish a current density of 1 mA/cm$^2$ at the anode. Diffusion calculations indicate that this is apparently the maximum current density which can be supported at the plane electrode surface; and experience shows that this current density is approximately equal to about 100 mA/cm$^2$ at a properly constructed porous electrode in which the fuel diffuses from a gas space on one side to the electrolyte on the other. The electrolyte consisted of 80 g NaNO$_3$ amd 10 g Na$_2$B$_4$O7.10H$_2$O in 200 g water, with pH adjusted to 9.0.

Analytical grade propane was purified by passing it through a column of Ascarite to remove any residual traces of CO$_2$, then through concentrated H$_2$SO$_4$ at 90$^O$C to remove residual olefins, and finally through a vessel containing electrolyte at 90$^O$C, in order to presaturate it with moisture. The gas then entered the anode compartment through a capillary jet, bubbled over the anode, and was led off through a reflux condenser to a U-tube filled with, first, a portion of CaCl$_2$, and finally, a portion of Mg(ClO$_4$)$_2$, to remove water vapour. Samples of the dry gas were withdrawn at this point for analysis, and the remaining gas was allowed to exit through a U-tube which contained Ascarite and Mg(ClO$_4$)$_2$ to guard against possible back diffusion from the atmosphere.

Gas samples were analyzed by a gas chromatograph with a flame ionization detector. The gas sample was carried through heated nickel catalyst by hydrogen carrier gas, and $CO_2$ was thus reduced to $CH_4$, which was measured by the flame ionization. The apparatus was calibrated against standard samples of gas containing known quantities of $CO_2$.

At the start of a run, the cell was placed in a bath thermostatically controlled at $90^oC$. The propane stream was set at about 20 ml/min. After about 30 minutes, with gas samples taken every 10 minutes, the $CO_2$ in the exit gas reached a minimum, usually about 3-5 ppm, which remained steady for several hours.

After the polarizing current was applied, the $CO_2$ content of the exit gas increased rapidly and reached a steady state, usually between 125 and 355 ppm, in about 30-40 minutes. This value remained constant, within 20 ppm, for the duration of the run, generally 2-3 hours, though some runs extended to 12 hours.

After the polarizing current was discontinued, the $CO_2$ content of the exit gas decreased until after about two hours it was less than 30 ppm. It required 6 or 8 hours of continued gas flow for the $CO_2$ readings to drop to the initial value of 3-5 ppm. This indicates the tendency of the electrolyte and cell to retain some portion of $CO_2$.

In some runs, the pH of the electrolyte was adjusted to 7.0 instead of 9.0. After these runs, the original level of 3-5 ppm of $CO_2$ was recovered in 3-4 hours showing that $CO_2$ is released from the electrolyte more rapidly at the lower pH.

After the run was completed, the electrolyte was examined as follows: a portion was acidified, and 0.02$\underline{M}$ $KMnO_4$ was added dropwise, waiting for the colour to be discharged after each addition. The number of drops required to produce a colour stable for 90 seconds was essentially identical with that observed in the same quantity of electrolyte which had not been treated with propane. Evidently the used electrolyte contained no substances which reduce $KMnO_4$.

A second portion of electrolyte from the run was treated with a few drops of ammonium hydroxide, and a few drops of alcoholic dimethylglyoxime. After it was warmed for a few minutes, no precipitate or colour developed. Evidently no significant amount of nickel had dissolved from the anode.

The anode was washed and dried, and examined at 40x magnification. No signs of etching or alteration of the black surface were visible. These observations indicate that there was no appreciable attack on the anode, even after 12 hours of polarization.

From the rate of propane flow, the average $CO_2$ content of exit gas, and the duration and strength of the polarizing current, anode current efficiencies were estimated. Presumably a number of factors such as hold-up of $CO_2$ in the electrolyte, loss of $CO_2$ via the cathode compartment and uncertainties inherent in estimating the average $CO_2$ content of the exit gas were responsible for the fact that the calculated anode efficiencies were in the range of only 60 to 80% in the majority of runs. However, because efficiencies approaching and exceeding 100% were calculated in a number of instances, no intermediate oxidation products were detected, and the anode itself was not attacked, it is believed that the actual anode efficiency attained was substantially 100%.

The overpotential at the current density of 1 mA/cm$^2$ on several $Ni_3S_2$ anodes lay between 160 and 180 mV. It was a function of the particular anode, and was reproducible within 4 mV from run to run. The cycling observed heretofore in direct hydrocarbon fuel cells with platinum anodes was not experienced. The current held steady throughout long test runs.

These observations indicate that 1- propane is oxidized at the anode; 2- no readily oxidizable intermediate products were found; 3- overpotentials for propane oxidation under these conditions do not exceed 180 mV; 4- there is no substantial attack on the anode;

and 5- the anode current efficiency is probably 100%. The anode behaviour was also satisfactory when the electrolyte pH was lowered from 9.0 to 7.0.

## Example 2

Runs were made as in Example 1, but the electrolyte consisted of 50 g $Na_2SO_4$ and 10 g $Na_2B_4O_7.10H_2O$ in 200 g water.  Results were identical with those of Example 1.  This observation indicates that $CO_2$ production was not dependent on the nitrate ion.

## Example 3

Nickel sulphide, nominally NiS, was prepared by mixing nickel powder with the theoretical or atomic equivalent amount of sulphur and heating the mixture to a dull red heat for one hour.  It has long been recognized that the resulting product is somewhat deficient in sulphur.  The literature indicates that the product is actually a solid solution of $Ni_7S_6$ in NiS or $Ni_3S_2$ (G. Kullerud and R.A. Yund, J. Petrology 3 (1963), 221).

Electrodes were prepared from this product and tested just as in Example 1.  The results were substantially identical with those obtained in Example 1, except that overpotentials lay between 175 and 200 mV.

- 26 -

## Example 4

A run was made with an anode prepared from the mineral bornite, of nominal compositions $Cu_3FeS_3$, oxidizing propane under conditions similar to those described in Example 1. The overpotential was observed to be only 165 mV at high current density.

## Example 5

Anodes were prepared in similar fashion to those of Example 1, but from copper and sulphur powders in proportions to produce $Cu_2S$; anodes were also prepared from $Cu_2S$ manufactured commercially. These runs with these anodes were essentially similar to those of Example 1. The electrolyte was tested after the run by adding a solution of sodium sulphide dropwise. No precipitate or colouration resulted, showing that the electrolyte contained no copper. The observations were similar to those of Example 1, except that the overpotentials lay between 195 and 225 mV.

It will be understood that the invention is not limited to the specific materials and fuels mentioned. Hydrogen, ethanol and hexanol can also be oxidized; and it is contemplated that hydrocarbons, including for example fuels which include, or are predominatly by volume, methane (e,g, natural gas) or ethane and higher hydrocarbons of the paraffin, olefin and alicyclic series as well, can be oxidized, just as they are on platinum anodes.

It is to be noted that these anodes are also useful in cells fueled by hydrogen.  Such cells may be advantageous where it is convenient to reform hydrocarbons by means of partial oxidation or water gas shift reactions to produce a gas containing hydrogen and carbon dioxide, or where hydrogen is produced in some other process, or is available as a byproduct.

CLAIMS:

1.    A method of generating electric current comprising oxidizing hydrogen, hydrocarbon or other fuel in a fuel cell (1) in contact with an electrolyte comprising water and in contact with an anode (2) for oxidizing the fuel, characterised in that the electrolyte comprising water has a pH in the range of 5 to 10 and in that the anode (2) has at least one lower sulphide of at least one transition metal present at the anode surface as electrocatalyst for oxidation of the fuel, the sulphide being present at the anode surface in a sufficient amount to catalyze electro-chemical oxidation of the fuel and being substantially immune to chemical and electrochemical attack under conditions of operation of the cell (1).

2.    A method according to claim 1 characterised in that the pH is in the range of 6 to 10.

3.    A method according to claim 1 characterised in that at least one transition metal includes copper, nickel, iron or cobalt.

4.    A method according to claim 1 characgerised in that at least one lower sulphide present at the anode surface includes a sulphide having the nominal composition $Ni_3S_6$, NiS, $Ni_7S_6$, $Cu_2S$, $Cu_9S_5$, $Cu_{1.75}S_1$, $CO_4S_3$, $Cu_3FeS_3$ or $Fe_xS$, wherein "x" is any whole or fractional number in the range of 1 to 2.

5.    A method according to claim 1, wherein the electrolyte includes a conductive salt in solution, characterised in that the conductive  salt is $NaNO_3$, $Na_2SO_4$, $NaCl$, $KNO_3$, $K_2SO_4$, $KCl$, $LiCl$, $LiNO_3$, $Li_2SO_4$, $CsNO_3$, $Cs_2SO_4$, $CsCl$, $KH_2PO_4$, $K_2HPO_4$, $NaH_2PO_4$, $Na_2HPO_4$, $NaBF_4$, $KBF_4$, $Na_2SiF_6$, $K_2SiF_6$, $Mg(BF_4)_2$, $Ca(BF_4)_2$, $MgSiF_6$, $CaSiF_6$, $Mg(NO_3)_2$, $Ca(NO_3)_2$, $MgCl_2$, $MgSO_4$, $CaCl_2$, or a mixture containing at least one of these salts.

6.    A method according to claim 1, wherein the electrolyte includes a buffer, characterised in that the buffer includes $Na_2B_4O_7$, $NaBO_2$, $NaH_2PO_4$, $Na_2HPO_4$, a corresponding potassium salt or a mixture of two or more of these salts.

7.    A method according to claim 1 characterised in that the electrolyte is removed from the cell during operation of the cell (1), the $CO_2$ is removed from the electrolyte while the electrolyte is outside the cell (1), and the electrolyte from which $CO_2$ has been removed is returned to the cell (1).

8.    A method according to claim 7 wherein $CO_2$ is removed from the electrolyte continuously, the electrolyte is agitated to assist in removing $CO_2$ therefrom, or the electrolyte is agitated while contacting the electrolyte with a gas into which the $CO_2$ is released.

9.    A method according to claim 8 characterised in that the electrolyte and gas contact one another in countercurrent flow while being agitated by flowing over baffle means.

10.    A fuel cell for oxidizing hydrogen, hydrocarbons or other fuel according to the method of any preceding claim, characterised in that the cell (1) comprises: an aqueous electrolyte comprising water having a pH in the range of 5 to 10, an anode, for oxidizing the fuel, including at the surface of the anode (2) at least one lower sulphide of at least one transition metal, and an oxygen cathode, at least one lower sulphide being present at the surface of the anode in sufficient amount to catalyze electrochemical oxidation of the fuel, and substantially immune to chemical and electrochemical attack under cell operating conditions.

# EUROPEAN SEARCH REPORT

European Patent Office

Application number

EP 78 30 0429

## DOCUMENTS CONSIDERED TO BE RELEVANT

| Category | Citation of document with indication, where appropriate, of relevant passages | Relevant to claim |
|---|---|---|
| X | Journal US JOURNAL OF THE ELECTROCHEMICAL SOCIETY, vol. 116, 1969 no. 4, pages 452-453 R. JASINSKI: "The Anodic oxidation of CO on nickelsulfide in base" * Page 452, left-hand column, lines 27-32; page 453, right-hand column lines 15-28 * | 1,3,4, 10 |
| | US - A - 3 331 703 (G.J. YOUNG) * Claim 1 * | 7 |
| | GB - A - 961 367 (ESSO RESEARCH AND ENGINEERING COMPANY) * Claims 1 and 3; page 2, lines 12-44 * | 7 |
| A | Journal ENERGY CONVERSION, vol. 16, 1977, no. 3, pages 91-94 KENNETH: "Oxidation of methanol on agitated bed electrodes using non-metallic electrocatalysts" * Abstract * | |
| A | GB - A - 910 870 (ESSO RESEARCH) * Page 2, line 98 - page 3, line 8 * | |
| A | GB - A - 1 006 863 (ENGELHARD INDUSTRIES) * Page 3, lines 43-52; page 5, lines 89-106 * ./. | |

CLASSIFICATION OF THE APPLICATION (Int. Cl.²)

H 01 M 4/90
8/08
C 01 G 1/12

TECHNICAL FIELDS SEARCHED (Int.Cl.³)

H 01 M 4/90

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-03-1979 | D'HONDT |

EPO Form 1503.1  06.78

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| A | GB − A − 1 449 233 (EXXON RESEARCH AND ENG. COMP.) <br><br> * Page 3, lines 65-71; claim 1 * <br><br> ------ | | |
| | | | **TECHNICAL FIELDS SEARCHED (Int. Cl.²)** |

EPO Form 1503.2   06.78